# EUROPÄISCHE PATENTANMELDUNG

(11) **EP 1 798 338 A1**
(43) Veröffentlichungstag der Anmeldung: **20.06.2007**
(21) Anmeldenummer: 06025532.0
(22) Anmeldetag: 11.12.2006
(51) Int. Cl.: D21F 3/02, D21G 1/02, F16C 13/00

(54) **Schuhwalze**

(30) Priorität: 16.12.2005 DE 202005019693 U
(71) Anmelder: Andritz Küsters GmbH & Co. KG, 47805 Krefeld (DE)
(72) Erfinder: Billen, Uwe, 47509 Rheurdt (DE)
(74) Vertreter: Sparing Röhl Henseler Patentanwälte European Patent Attorneys

(57) **Zusammenfassung**

Schuhwalze (1) zur Bildung eines Langspalts mit einer Gegenwalze zur Behandlung einer Materialbahn mit einem um einen Träger (3) drehbaren, flexiblen Walzenmantel (4), der randseitig verschließbar und im Langspalt auf einer geschmierten Lauffläche (6) eines am Träger (3) angeordneten Druckschuhs (5) abgestützt ist, wozu eine erste Einrichtung (7) zum Auftragen von Schmiermittel auf die Innenseite des Walzenmantels (4), ein Schaber (9) zum Abrakeln von aufgetragenem Schmiermittel in einen an eine Abflussleitung (11) angeschlossenen Auffangbehälter (10) und eine zweite pumpenbetriebene Einrichtung (8) zum Absaugen von Schmiermittel für eine Entleerung des Walzenmantels (4) vorgesehen ist, wobei die zweite Einrichtung (8) mittels einer hydraulisch angetriebenen Pumpe (13) arbeitet, die am Träger (3) angeordnet ist und Schmiermittel der Abflussleitung (11) zuführt, die an den Auffangbehälter (10) für abgerakeltes Schmiermittel angeschlossen ist.

## Beschreibung

Die Erfindung betrifft eine Schuhwalze nach dem Oberbegriff des Anspruchs 1.

Aus der EP 1 306 564 A2 ist eine Schuhwalze zur Verwendung in einer Papiermaschine bekannt, bei der Schmiermittel, insbesondere Öl, aus dem Inneren der Schuhwalze wegführbar sind. Dazu ist eine Saugeinrichtung mit einer Verrohrung außerhalb der Schuhwalze vorgesehen. Neben Abdichtungsproblemen bedingt diese Zusatzeinrichtung Konstruktions- und Wartungsaufwand.

Aufgabe der Erfindung ist es daher, eine Schuhwalze gemäß dem Oberbegriff des Anspruchs 1 zu schaffen, die eine kompakt aufgebaute und wartungsarme Ölabfuhr unerwünschter Schmiermittelmengen innerhalb des Walzenmantels erlaubt.

Diese Aufgabe wird durch die Merkmale des Anspruchs 1 gelöst.

Hierdurch wird eine Schuhwalze geschaffen, die eine bedarfsbezogene Entleerung des Walzenmantels, insbesondere vor einem Wechseln des Walzenmantels, in einfacher Weise erlaubt.

Das angesaugte Schmiermittel wird demnach innerhalb des Walzenmantels gefördert für eine Abführung mit dem abgerakelten Medium. Dazu ist eine hydraulisch angetriebene Pumpe in die Schuhwalze integriert.

Der Druckschuh der Schuhwalze kann nach oben oder nach unten gerichtet sein. Das anzusaugende Schmiermittel wird vorzugsweise aus einem aufgrund der Schwerkraft sich bildenden Sumpf entnommen, der an einer tiefsten Stelle Schmiermittel sammelt.

Weitere Ausgestaltungen der Erfindung sind den Unteransprüchen und der nachfolgenden Beschreibung zu entnehmen.

Die Erfindung wird nachstehend anhand des in der beigefügten Abbildung dargestellten Ausführungsbeispiels näher erläutert.

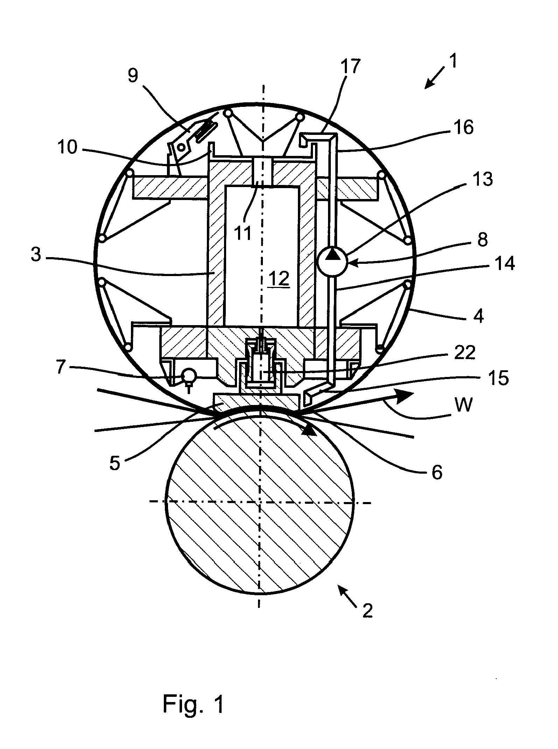

Die Fig. 1 zeigt schematisch einen Schnitt einer geschlossenen Schuhwalze 1, die zusammen mit einer Gegenwalze 2 zum Ausbilden eines Langspalts zum Behandeln einer Materialbahn W, insbesondere einer Papierbahn, vorgesehen ist. Die Schuhwalze 1 weist einen feststehenden Träger 3 auf, um den ein drehbarer Walzenmantel 4 angeordnet ist. Der Walzenmantel 4 besteht aus einem flexiblen Material, z.B. Gummi oder Kunststoff. Der Walzenmantel 4 ist schlauchförmig ausgebildet und mit seinen Enden an drehbar auf dem Träger 3 sitzenden Randscheiben (nicht dargestellt) befestigt, um eine geschlossene Schuhwalze 1 zu bilden.

Mindestens ein Druckschuh 5 ist am Träger 3 angeordnet. Der Druckschuh 5 besitzt eine Lauffläche 6. Der Walzenmantel 4 ist im Langspalt auf der Lauffläche 6, und zwar unter Schmierung derselben, abgestützt. Der Druckschuh 5 ist über eine Druckkammer 22, in die ein Drucköl einleitbar ist, gegen die Gegenwalze 2 pressbar.

Für die Schmierung der Lauffläche 6 ist eine erste Einrichtung 7 zum Auftragen von Schmiermittel auf die Innenseite des Walzenmantels 4 vorgesehen. Die erste Einrichtung 7 ist beispielsweise eine Ölzufuhr.

Das von der ersten Einrichtung 7 auf die Innenseite des Walzenmantels 4 aufgetragene Öl wird vom Walzenmantel 4 beim Umlaufen mitgenommen und gelangt in dem Langspalt auf die Lauffläche 6 des Druckschuhs 5. Mittels eines Schabers 9 ist das auf die Innenseite des Walzenmantels 4 aufgebrachte Schmiermittel hinter dem Langspalt wieder abrakelbar. Der Schaber 9 ist vorzugsweise in einem oberen Bereich der über Kopf arbeitenden Schuhwalze 1 angeordnet, um unter Nutzung der Schwerkraft das abgerakelte Schmiermittel in einen Auffangbehälter 10 fließen zu lassen, von wo es über eine an den Auffangbehälter angeschlossene Abflussleitung 11 abführbar ist. Die Abflussleitung 11 ist hier vorzugsweise über einen Abflusskanal 12 innerhalb des Trägers 3 aus der Schuhwalze 1 geführt.

Ferner ist eine zweite pumpenbetriebene Einrichtung 8 zum Absaugen von Schmiermittel bei Bedarf für eine Entleerung des Walzenmantels 4 vorgesehen. Diese zweite Einrichtung 8 arbeitet mittels einer hydraulisch angetriebenen Pumpe 13, die am Träger 3 angeordnet ist und Schmiermittel der Abflussleitung 11 für abgerakeltes Schmiermittel zuführt.

Durch das Auftragen von Schmiermittel kann sich eine überschüssige Ölmenge innerhalb des Walzenmantels 4 unter Schwerkraftwirkung in einem Sumpf ansammeln. Die Pumpe 13 ist von einem Hydraulikmotor antreibbar und dabei vorzugsweise selbstansaugend. Die Ölzufuhr zum Hydraulikmotor wird vorzugsweise durch einen Zapfen der Schuhwalze 1 zugeführt.

Die Pumpe 13 sitzt an einer Saugleitung 14, die vorzugsweise einen in den Bereich eines Ölsumpfs hineinragenden Saugrüssel 15 aufweist. Der Saugrüssel 15 ist vorzugsweise an der tiefsten Stelle des Walzenmantels 4 angeordnet.

Die Pumpe 13 fördert Schmiermittel über eine Rohrleitung 16, insbesondere Steigleitung, die einen Auslassrüssel 17 aufweist. Die Pumpe 13 pumpt das Schmiermittel über die Rohrleitung 16 in einen oberen Bereich der Schuhwalze 1, wo das gepumpte Schmiermittel über den Auslassrüssel 17 vorzugsweise in den Auffangbehälter 10 für das abgerakelte Schmiermittel läuft.

Es wird immer aus dem die Pumpe 13 antreibenden Hydraulikmotor austretendes Öl zur Grundschmierung der Pumpe 13 verwendet werden, falls die Pumpe aus dem Ölsumpf nur Luft ansaugt.

## Patentansprüche

1. Schuhwalze (1) zur Bildung eines Langspalts mit einer Gegenwalze zur Behandlung einer Materialbahn mit einem um einen Träger (3) drehbaren, flexiblen Walzenmantel (4), der randseitig verschließbar und im Langspalt auf einer geschmierten Lauffläche (6) eines am Träger (3) angeordneten Druckschuhs (5) abgestützt ist, wozu eine erste Einrichtung (7) zum Auftragen von Schmiermittel auf die Innenseite des Walzenmantels (4), ein Schaber (9) zum Abrakeln von aufgetragenem Schmiermittel in einen an eine Abflussleitung (11) angeschlossenen Auffangbehälter (10) und eine zweite pumpenbetriebene Einrichtung (8) zum Absaugen von Schmiermittel für eine Entleerung des Walzenmantels (4) vorgesehen ist, **dadurch gekennzeichnet, dass** die zweite Einrichtung (8) mittels einer hydraulisch angetriebenen Pumpe (13) arbeitet, die am Träger (3) angeordnet ist und Schmiermittel der Abflussleitung (11) zuführt, die an den Auffangbehälter (10) für abgerakeltes Schmiermittel angeschlossen ist.

2. Schuhwalze nach Anspruch 1, **dadurch gekennzeichnet, dass** die Pumpe (13) in den Auffangbehälter (10) für abgerakeltes Schmiermittel fördert.

3. Schuhwalze nach Anspruch 1 oder 2, **dadurch gekennzeichnet, dass** die Pumpe (13) Schmiermittel ansaugt über eine Saugleitung (14), die einen Saugrüssel (15) aufweist, und Schmiermittel fördert über eine Steigleitung (16), die einen Auslassrüssel (17) aufweist.

4. Schuhwalze (1) nach Anspruch 3, **dadurch gekennzeichnet, dass** der Druckschuh (5) nach unten gerichtet ist, benachbart zu dem der Saugrüssel (15) angeordnet ist.

5. Schuhwalze nach einem der Ansprüche 1 bis 4, **dadurch gekennzeichnet, dass** die Abflussleitung (11) durch einen Kanal (12) im Träger (3) gebildet ist.

6. Schuhwalze nach einem der Ansprüche 3 bis 5, **dadurch gekennzeichnet, dass** der Saugrüssel (15) seitlich neben dem Druckschuh (5) angeordnet ist.

7. Schuhwalze nach einem der Ansprüche 1 bis 6, **dadurch gekennzeichnet, dass** das zum hydraulischen Antrieb der Pumpe (13) verwendbare Schmiermittel als Schmiermittel für die Pumpe (13) einsetzbar ist.
